# EUROPÄISCHE PATENTANMELDUNG

(11) **EP 2 921 223 A1**
(43) Veröffentlichungstag der Anmeldung: **23.09.2015**
(21) Anmeldenummer: 14160254.0
(22) Anmeldetag: 17.03.2014
(51) Int. Cl.: B01J 19/00, B01J 19/24, C08G 69/00

(54) **Vorrichtung und Verfahren zur Polykondensation von Prepolymeren unter Entfernung gasförmiger Spaltprodukte und Verwendung zur kontinuierlichen Herstellung von Polyamiden und/oder deren Co-Polymeren**

(71) Anmelder: Uhde Inventa-Fischer GmbH, 13509 Berlin (DE); ThyssenKrupp AG, 45143 Essen (DE)
(72) Erfinder: Siebecke, Ekkehard, 10825 Berlin (DE); Bär, Mirko, 16547 Birkenwerder (DE); Katzer, Johannes, 10405 Berlin (DE)
(74) Vertreter: Pfenning, Meinig & Partner GbR

(57) **Zusammenfassung**

Die Erfindung betrifft eine Vorrichtung zur Polykondensation von Prepolymeren unter Entfernung gasförmiger Spaltprodukte enthaltend einen vertikal angeordneten zylindrischen oder konischen Reaktor (1) mit einer doppelwandigen Reaktorwand (2), mindestens einem Einlass (3) für das Prepolymer, mindestens einem Auslass (4) für die gasförmigen Spaltprodukte und mindestens einem Polymerauslass (5) sowie einer Verteilungsvorrichtung (6) zur flächigen Verteilung des Prepolymers auf der Innenfläche der Reaktorwand (2), dadurch gekennzeichnet, dass auf der Innenfläche der Reaktorwand (2) mindestens eine Gewebestruktur (7) kraft- oder formschlüssig befestigt ist und/oder in die Reaktorwand (2) an der Innenfläche eine Gewebestruktur integriert ist.

## Beschreibung

Die vorliegende Erfindung betrifft eine Vorrichtung zur Polykondensation von Prepolymeren unter Entfernung gasförmiger Spaltprodukte sowie ein entsprechendes Verfahren zur kontinuierlichen Herstellung von Polyamiden und deren Co-Polymeren unter Verwendung dieser Vorrichtung. Ebenso betrifft die Erfindung ein Polyamid bzw. Co-Polymer, das nach diesem Verfahren herstellbar ist.

Bei der Polymerisation von Polyamid 6 (PA6) und dessen Co-Polymeren in einem zweistufigen Prozess wird aus Caprolactam unter Zugabe von Wasser , Additiven und optional Edukten für die Co-Polymerisation nach einer Ringöffnungsstufe in der ersten Reaktorstufe eine Polykondensation bzw. Polyaddition durchgeführt. Diese Polykondensation bzw. Polyaddition des Prepolymers wird in der Regel in einem zweiten separaten Polymerisationsreaktor (VK-Rohr, VK = vereinfacht kontinuierlich) durchgeführt. Als initialer Prozessschritt im Polymerisationsreaktor wird ein Teil des Wassers aus dem Prepolymer unter reduziertem Druck und bei erhöhtem Temperatur abgetrennt.

Stand der Technik ist die Verwendung eines von innen beheizten rotationssymmetrischen Verdrängerkörpers (in der Regel ein Doppelkonus), der zumindest zum Teil oberhalb der Schmelzeoberfläche zentrisch im Reaktor installiert ist. Die Prepolymerschmelze wird zentral auf den Verdrängerkörper gegeben und durch Verteilung über die Oberfläche des Körpers wird Verdampferoberfläche für die Wasserverdampfung erzeugt. Während des Strömvorgangs wird eine begrenzte Oberflächenerneuerung realisiert, die den Wassertransport an die Schmelzeoberfläche zur Verdampfung erleichtert. Die Verteilung der Prepolymerschmelze auf dem rotationssymmetrischen Körper wird durch Verteilorgane wie z.B. ein über den Verdrängerkörper gestülpten Verteilkonus, der durch die Ausbildung eines Spaltes zum Verdrängerkörper einen Druckverlust erzeugt, der ein gleichmäßiges Ausströmen in alle Richtungen gewährleistet. Alternativ kann auch ein Verteilring auf den Verdrängerkörper gesetzt werden, der mittels einer gezackten Oberkante und/oder einer Reihe von Lochungen im unteren Bereich eine Verteilung des Prepolymers über den gesamten Umfang ermöglicht. Problem aller dieser technischen Lösungen ist die begrenzte Oberfläche, die innerhalb des Reaktors realisiert werden kann. Ein weiterer Nachteil ist die Neigung der Prepolymerschmelze zur Strähnenbildung, die eine komplette Benetzung der beheizten Oberfläche bei dünnem Film erschwert. Prepolymer, das auf beheizten Oberflächen verbleibt, kann durch Zersetzungsprozesse geschädigt werden und die Produktqualität beeinträchtigen.

Als Weiterentwicklung des Standes der Technik kann die Prepolymerschmelze auch entlang der zylindrischen Außenwand des Polymerisationsreaktors (VK-Rohr) zugegeben werden. Die gleichmäßige Verteilung wird über einen umlaufenden Verteilspalt realisiert, wo die gleichmäßige Verteilung durch Erzeugung eines Druckverlustes im Zulauf gewährleistet wird. Die Reaktorwand wird mittels eines beheizten Reaktormantels auf Verdampfungstemperatur oberhalb der Siedetemperatur des Prepolymers gehalten. Durch die Zugabe des Prepolymers entlang der Reaktorwand wird die maximal mögliche Oberfläche erreicht und somit eine maximale Wasserverdampfung gewährleistet.

Um der Strähnenbildung des Prepolymers entgegenzuwirken, welche die effektive Verdampfungsoberfläche reduzieren würde, können mechanische Schaber verwendet werden, die an einer zentralen Rührwerkswelle installiert sind. Sie werden in einem leichten Winkel zur Reaktorachse geneigt eng an der Außenwand entlanggeführt und verstreichen dickere Strähnen zu einem gleichmäßigen Film. Eine Berührung der Schaber mit der Reaktorwand wird in der Regel vermieden. Durch den Einsatz von solchen Schabern wird die effektiv genutzte Verdampferfläche deutlich vergrößert und eine Oberflächenerneuerung in einem hohen Maße gewährleistet. Die Ausführung mit einem von außen angetriebenen Schabersystem erfordert jedoch eine hohe Fertigungsgenauigkeit in Bezug auf die Rundheit des Reaktors und die Zentralität der Schaberantriebswelle. Dazu ist auch die Durchführung der Welle durch den Reaktordeckel aufwändig abzudichten, um einen schädlichen Sauerstoffeinbruch zu verhindern.

Aus der DE 10 2006 025 942 A1 ist eine Vorrichtung zur Herstellung von Polyestern bekannt, wobei hier ein Reaktor eingesetzt wird, der eine Fallfilmzone mit mehreren Fallfilmrohren aufweist, wobei die Fallfilmrohre eine Füllung aus einer Packung, Füllkörpern oder Streckmetall aufweisen.

Die US 8,013,107 B2 beschreibt ein Verfahren zur Herstellung von Polyethylenterephthalat, bei dem die Polymerschmelze in einer Fallfilmzone in einem Kettengehänge oder einer Drahtkonstruktion ablaufen kann.

Ausgehend hiervon war es Aufgabe der vorliegenden Erfindung, den Reaktor für die Polykondensation der Prepolymere so zu optimieren, dass eine effektive Verdampfung des Wassers aus der Prepolymerschmelze ermöglicht wird. Gleichzeitig sollte dabei die Verwendung beweglicher Bauteile im Reaktor vermieden werden, um eine lange Reaktorlaufzeit zu gewährleisten.

Diese Aufgabe wird durch die Vorrichtung mit den Merkmalen des Anspruchs 1, das Verfahren mit den Merkmalen des Anspruchs 10 und das Polyamid bzw. Co-Polymer nach Anspruch 14 gelöst. In Anspruch 15 werden erfindungsgemäße Verwendungen angegeben. Die weiteren abhängigen Ansprüche zeigen vorteilhafte Weiterbildungen.

Erfindungsgemäß wird eine Vorrichtung zur Polykondensation von Prepolymeren unter Entfernung gasförmiger Spaltprodukte bereitgestellt, die einen vertikal angeordneten zylindrischen oder konischen doppelwandigen Reaktor mit mindestens einem Einlass für das Prepolymer, mindestens einem Auslass für die gasförmigen Spaltprodukte und mindestens einem Polymerauslass enthält. Der Reaktor weist weiterhin eine Reaktorwand sowie eine Verteilungsvorrichtung zur flächigen Verteilung des Prepolymers auf der Innenwand, d.h. auf der Innenfläche des Reaktors auf.

Die Vorrichtung ist dadurch gekennzeichnet, dass reaktorseitig auf der Innenfläche der Reaktorwand mindestens eine Gewebestruktur kraft- oder formschlüssig befestigt ist und/oder in die Reaktorwand an der Innenfläche eine Gewebestruktur integriert ist. Es konnte überraschenderweise festgestellt werden, dass bei der Belegung der Innenfläche der Reaktorwand des vertikal angeordneten zylindrischen oder konischen Reaktors durch eine Gewebestruktur die Verteilung der Prepolymerschmelze optimiert werden kann und die Tendenz zur Strähnenbildung deutlich reduziert wird. Durch die Gestaltung der Gewebestruktur kann auch über eine beheizte Vlieslänge von 0,1 bis 3,0 m eine gleichmäßige Schmelzeverteilung gewährleistet werden. Durch die Umströmung der einzelnen Elemente der Gewebestruktur erfolgt eine Oberflächenerneuerung, die die Effizienz der Verdampfung im Verhältnis zu einer ebenen Oberfläche deutlich steigert.

Vorzugsweise ist die mindestens eine Gewebestruktur ausgewählt aus der Gruppe bestehend aus einem Geflecht, einer Wendel, einem Streckmetall oder Kombinationen hiervon. Als Material für die Gewebestruktur sind metallische oder auch verschleißfeste, nicht-metallische Materialien, wie z.B. keramische Materialien oder hochtemperaturbeständige Kunststoffe bevorzugt.

Die Gewebestruktur weist eine Vielzahl von Maschen auf, wobei die Maschenweite vorzugsweise im Bereich von 6 bis 100 mm, besonders bevorzugt von 20 bis 45 mm liegt. Die Maschenweite wird dabei in Abhängigkeit von der Viskosität des Polymers eingestellt.

Die Anbringung der Gewebestruktur kann auf verschiedene Weise erfolgen.

Eine erste erfindungsgemäße Variante sieht vor, dass die Gewebestruktur integraler Bestandteil der Reaktorwand ist, so dass die Innenfläche der Reaktorwand beispielsweise eine geflechtartige Strukturierung aufweist.

Eine weitere Variante sieht vor, dass die Gewebestruktur ein separates Bauteil darstellt, dass mittels Befestigungshaken an der Innenfläche der Reaktorwand befestigt wird. Eine andere Möglichkeit besteht darin, dass die Gewebestruktur an der Innenfläche der Reaktorwand festgeschweißt wird.

Alternativ ist es auch möglich, dass die mindestens eine Gewebestruktur eine derartige Formsteifigkeit aufweist, die eine formschlüssige Befestigung des Gewebes an der Innenfläche der Reaktorwand erlaubt.

Weiterhin ist es bevorzugt, dass die Verteilungsvorrichtung zur gleichmäßigen Verteilung des zugeführten Prepolymers über den Umfang des Reaktors ausgewählt ist aus der Gruppe bestehend aus Verteilungsschlitzen, Verteilungsplatten mit einer Vielzahl von Öffnungen, Zackenrinnen, Überlaufrinnen oder Kombinationen hiervon.

Dabei ist es besonders bevorzugt, dass die Vorrichtung keine weiteren Elemente zur gleichmäßigen Verteilung des Prepolymers an der Innenfläche der Reaktorwand, wie z.B. separate Schaber an einer durch einen Motor angetriebenen, rotierenden Welle in der Mitte des Reaktors, die an der Innenwand des Reaktors entlangstreichen, aufweist. Hiermit entfällt die Ausrüstung, die Wellendurchführung mit potentieller Undichtigkeit, sowie die Ansteuerung und Regelung des Rührwerksmotors.

Der Reaktor weist vorzugsweise einen Durchmesser, gemessen an der Innenwand, von 1,2 bis 4,0 m und eine Länge von vorzugsweise 0,4 bis 2,0 m auf.

Eine weitere bevorzugte Ausführungsform sieht vor, dass die Reaktorwand einen beheizbaren Doppelmantel aufweist, der vorzugsweise mit einem Wärmeträgermedium beheizbar ist, indem das Wärmeträgermedium durch den Zwischenraum zwischen beiden Mänteln geleitet wird. Als Wärmeträgermedium ist hier insbesondere ein dampfförmiges Wärmeträgeröl vorgesehen. Über das Wärmeträgermedium kann so Wärmeenergie in den Reaktor geleitet werden, sodass der Wasseranteil in der Polymerschmelze verdampft werden kann.

Erfindungsgemäß wird ebenso ein Verfahren zur kontinuierlichen Herstellung von Polyamiden und/oder deren Copolymeren bereitgestellt, bei dem das oder die Prepolymere unter Entfernung gasförmiger Spaltprodukte mit der Vorrichtung, wie sie zuvor beschrieben wurde, polykondensiert werden.

Hierbei ist es bevorzugt, dass bei der Polykondensation eine Verdampfung der Spaltprodukte durch eine Beheizung über den Doppelmantel mittels eines Wärmeträgermediums, insbesondere eines Wärmeträgeröls erfolgt.

Bei dem erfindungsgemäßen Verfahren herrscht im Polykondensationsreaktor vorzugsweise ein Druck von 350 mbar (absolut) bis 3500 mbar (absolut), besonders bevorzugt von 500 bis 1050 mbar.

Das Prepolymer wird vorzugsweise mit einer Viskosität zwischen 6,0 Pas und 5,0 mPas, besonders bevorzugt zwischen 0,4 Pas und 2,1 Pas in den Polykondensationsreaktor gegeben.

Erfindungsgemäß werden ebenso ein Polyamid und/oder dessen Copolymere, die nach dem zuvor beschriebenen Verfahren herstellbar sind, bereitgestellt.

Die erfindungsgemäße Vorrichtung findet Verwendung bei der kontinuierlichen Herstellung von Polyamiden und/oder deren Copolymeren.

Anhand der nachfolgenden Figuren und Beispielen soll der erfindungsgemäße Gegenstand näher erläutert werden, ohne diesen auf die hier gezeigten spezifischen Ausführungsformen einschränken zu wollen.
Fig. 1 zeigt anhand einer schematischen Darstellung den Aufbau einer erfindungsgemäßen Vorrichtung zur Polykondensation.
Fig. 2 zeigt anhand eines Diagramms das Verdampfungsverhalten bei einem Reaktor gemäß dem Stand der Technik ohne Gewebestruktur.

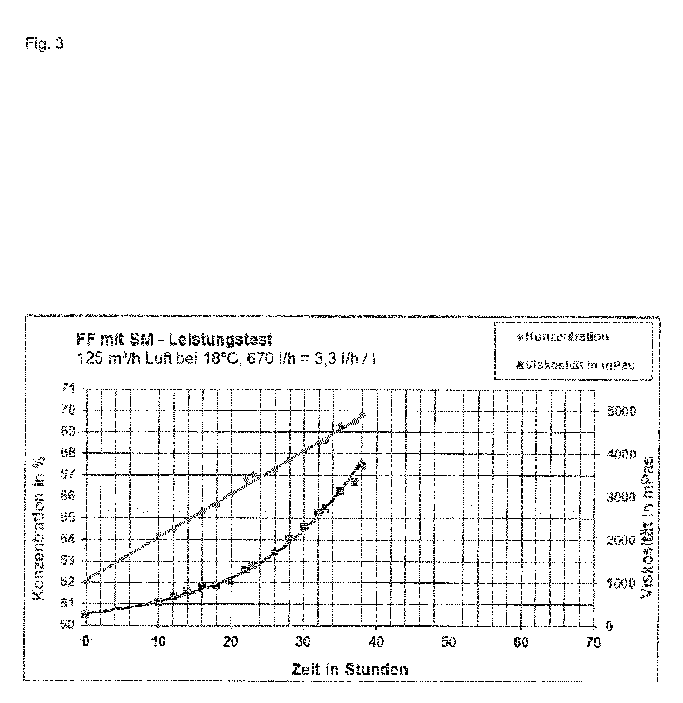

Fig. 3 zeigt anhand eines Diagramms das Verdampfungsverhalten eines erfindungsgemäßen Reaktors mit Gewebestruktur.

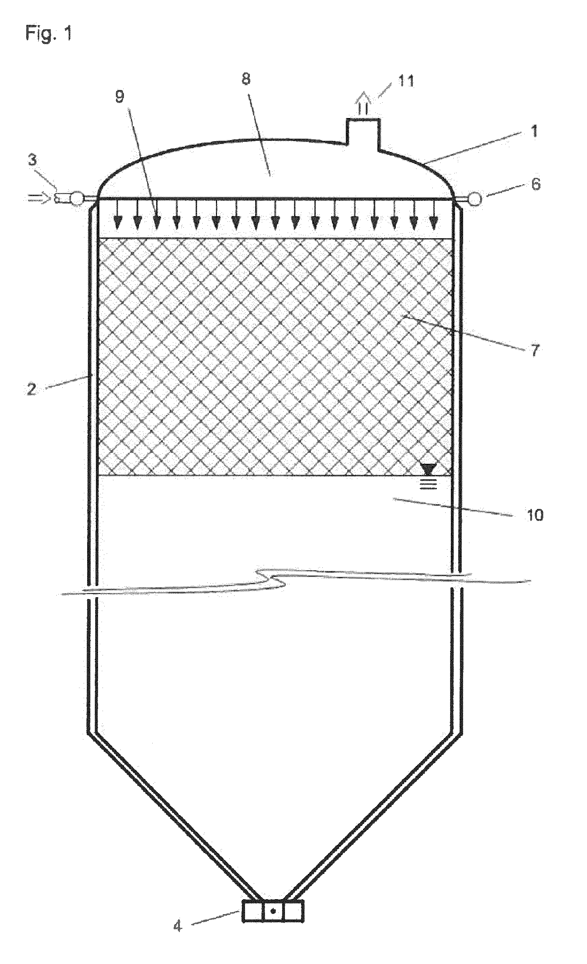

In Fig. 1 ist eine erfindungsgemäße Vorrichtung zur Polykondensation von Prepolymeren dargestellt. Diese weist einen Reaktor 1 mit einer doppelwandigen Reaktorwand 2 auf. Der Zwischenraum zwischen den Wänden der Reaktorwand 2 wird zum Durchströmen mit einem Wärmeträgermedium genutzt. Weiterhin weist die Vorrichtung einen Einlass 3 für die Prepolymerschmelze auf. Diese Schmelze wird mit einer Verteilungsvorrichtung 6, im vorliegenden Fall ein Verteilungsring, flächig auf der Innenfläche der Reaktorwand 2 verteilt. Der Schmelzfluss 9 des Prepolymers läuft somit auf der Innenfläche der Reaktorwand 2 ab. Erfindungsgemäß weist nun diese Innenfläche der Reaktorwand 2 eine Gewebestruktur 7 auf. In der vorliegenden Figur ist diese Gewebestruktur ein metallisches Geflecht mit einer gleichmäßigen Maschenweite. Die Maschenweite bestimmt sich dabei nach der Viskosität der Prepolymerschmelze. Durch das Ablaufen der Polymerschmelze der auf der Innenfläche der Reaktorwand 2 angeordneten Gewebestruktur 7 kommt es zu einer Umströmung der einzelnen Elemente der Gewebestruktur 7 durch die Polymerschmelze, was zu einer Oberflächenerneuerung führt, wodurch die Effizienz der Verdampfung gasförmiger Spaltprodukte im Verhältnis zu einer ebenen Innenfläche der Reaktorwand 2 deutlich verbessert wird. Nach Durchlauf des Reaktors 1 wird dann die polykondensierte Polymerschmelze über den Auslass 4 abgeführt. Die gasförmigen Spaltprodukte werden durch den Stutzen 11 aus dem Reaktor abgeleitet.

### Beispiel

Das Strömungsverhalten der Polymerschmelze (Fallfilm) wurde in einem Versuchsreaktor mit einer vertikalen zylindrischen Innenwand von 300 mm Durchmesser und 2000 mm Länge untersucht. Die innere Oberfläche des Versuchsreaktors wurde mit Metallgeflechten unterschiedlicher Art und Maschenweite belegt. Die Schmelzeströmung und -verteilung wurde mittels eines Strömungsmediums simuliert, das den Strömungseingenschaften von Polymerschmelzen unterschiedlicher Zusammensetzung und Viskosität entspricht. Das Strömungsmedium wurde mittels einer Zirkulationspumpe wiederholt über den Versuchsreaktor gepumpt und dort mittels einer Verteileinrichtung gleichmäßig über den Umfang verteilt. Die Effektivität der Oberflächenerneuerung und der tangentialen Verteilung der Schmelze wurde durch Aufkonzentrierung der Strömungsmediums untersucht. Bei kontinuierlicher Gasüberströmung wurde der Viskositätsanstieg durch Verdampfung einer Komponente des Strömungsmediums gemessen. In Abhängigkeit von der Wahl des Metallgewebes und der jeweiligen Maschenweite konnte durch beschleunigten oder verzögerten Viskositätsanstieg die Effektivität der einzelnen Metallgewebe gemessen und bewertet werden.

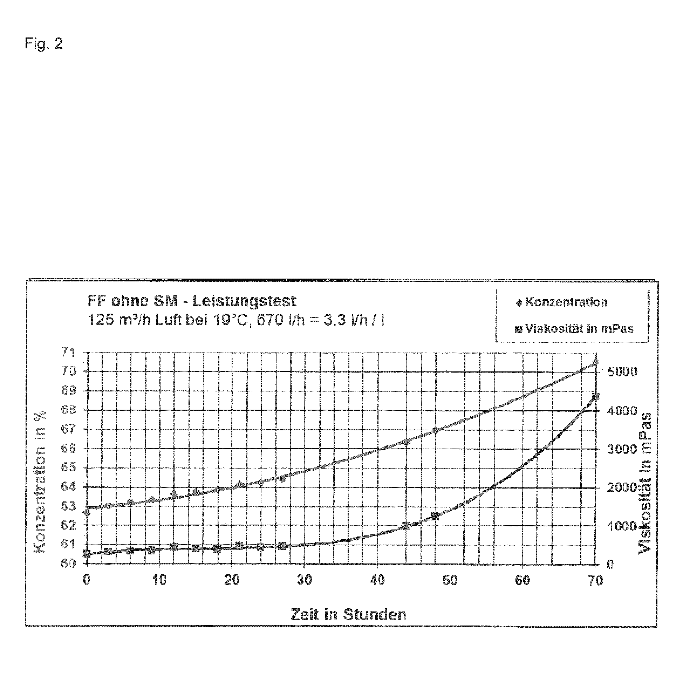

Es konnte festgestellt werden, dass eine dauerhafte Verschmutzung des Metallgewebes nicht stattfindet und dass eine gleichmäßige Verteilung des Strömungsmediums über die gesamte Länge des Versuchsreaktors möglich ist. Eine Strähnenbildung des Mediums konnte effektiv vermieden werden. Durch die Steigerung der Verweilzeit des Strömungsmediums im Fallfilmbereich kann die Verdampfungskapazität, wie in den Figuren 1 und 2 gezeigt, gesteigert werden. Im Versuchsbetrieb konnte eine Steigerung der Verdampferleistung von über 50%bei Verwendung von Streckmetall im Vergleich zum Betrieb ohne Metallgeflecht erreicht werden.

## Patentansprüche

1. Vorrichtung zur Polykondensation von Prepolymeren unter Entfernung gasförmiger Spaltprodukte enthaltend einen vertikal angeordneten zylindrischen oder konischen Reaktor (1) mit einer doppelwandigen Reaktorwand (2), mindestens einem Einlass (3) für das Prepolymer, mindestens einem Auslass (4) für die gasförmigen Spaltprodukte und mindestens einem Polymerauslass (5) sowie einer Verteilungsvorrichtung (6) zur flächigen Verteilung des Prepolymers auf der Innenfläche der Reaktorwand (2),
**dadurch gekennzeichnet, dass** auf der Innenfläche der Reaktorwand (2) mindestens eine Gewebestruktur (7) kraft- oder formschlüssig befestigt ist und/oder in die Reaktorwand (2) an der Innenfläche eine Gewebestruktur integriert ist.

2. Vorrichtung nach Anspruch 1,
**dadurch gekennzeichnet, dass** die mindestens eine Gewebestruktur (7) ausgewählt ist aus der Gruppe bestehend aus einem Geflecht, einer Wendel, einem Streckmetall, oder Kombinationen hiervon, insbesondere aus einem metallischen oder einem verschleißfesten nichtmetallischen Material, insbesondere keramische Materialien oder hochtemperaturbeständige Polymere, besteht.

3. Vorrichtung nach einem der vorhergehenden Ansprüche,
**dadurch gekennzeichnet, dass** die mindestens eine Gewebestruktur (7) eine Vielzahl von Maschen aufweist und die Maschenweite im Bereich von 6 bis 100 mm, insbesondere von 20 bis 45 mm liegt.

4. Vorrichtung nach einem der vorhergehenden Ansprüche,
**dadurch gekennzeichnet, dass** die mindestens eine Gewebestruktur (7) mittels Befestigungshaken, Schweißverbindungen an der Innenfläche der Reaktorwand (2) befestigt ist.

5. Vorrichtung nach einem der vorhergehenden Ansprüche,
**dadurch gekennzeichnet, dass** die mindestens eine Gewebestruktur (7) ein Formsteifigkeit aufweist, die ein formschlüssige Befestigung des Gewebes an der Innenfläche der Reaktorwand ermöglicht.

6. Vorrichtung nach einem der vorhergehenden Ansprüche,
**dadurch gekennzeichnet, dass** die Verteilungsvorrichtung (6) zur gleichmäßigen Verteilung des zugeführten Prepolymers über den Umfang des Reaktors ausgewählt ist aus der Gruppe bestehend aus einem Verteilungsschlitz, einer Verteilungsplatte mit einer Vielzahl von Öffnungen, einer Zackenrinne, einer Überlaufrinne oder Kombinationen hiervon.

7. Vorrichtung nach einem der vorhergehenden Ansprüche
**dadurch gekennzeichnet, dass** die Vorrichtung frei von weiteren Elementen zur gleichmäßigen Verteilung des Prepolymers auf der Innenfläche der Reaktorwand (2) ist.

8. Vorrichtung nach einem der vorhergehenden Ansprüche
**dadurch gekennzeichnet, dass** der Reaktor (1) einen Durchmesser, gemessen an der Innenfläche der Reaktorwand (2), von 1,2 m bis 4,0 m und eine Länge von 0,4 m bis 2,0 m aufweist.

9. Vorrichtung nach einem der vorhergehenden Ansprüche,
**dadurch gekennzeichnet, dass** der Reaktor (1) einen beheizbaren Doppelmantel aufweist, der insbesondere mit einem Wärmeträgermedium, beheizbar ist.

10. Verfahren zur kontinuierlichen Herstellung von Polyamiden und/oder deren Co-Polymeren, bei dem ein Prepolymer unter Entfernung gasförmiger Spaltprodukte mit der Vorrichtung nach einem der vorhergehenden Ansprüche polykondensiert wird.

11. Verfahren nach Anspruch 10,
**dadurch gekennzeichnet, dass** bei der Polykondensation eine Verdampfung der Spaltprodukte durch eine Beheizung über den Doppelmantel mittels eines Wärmeträgermediums, insbesondere eines Wärmeträgeröls erfolgt.

12. Verfahren nach einem der Ansprüche 10 oder 11,
**dadurch gekennzeichnet, dass** im Reaktor (1) ein Druck von 350 mbar (absolut) bis 1500 mbar (absolut), bevorzugt von 500 mbar (absolut) von 1050 mbar (absolut) herrscht..

13. Verfahren nach einem der Ansprüche 10 bis 12,
**dadurch gekennzeichnet, dass** das Prepolymer mit einer Viskosität zwischen 6,0 mPas und 5,0 Pas, bevorzugt zwischen 0,4 Pas und 2,1 Pas in den Reaktor (1) gegeben wird.

14. Polyamid und/oder dessen Copolymere herstellbar nach dem Verfahren nach einem der Ansprüche 10 bis 13.

15. Verwendung der Vorrichtung nach einem der Ansprüche 1 bis 9 zur kontinuierlichen Herstellung von Polyamiden und/oder deren CoPolymeren.
